# EUROPEAN PATENT APPLICATION

(11) **EP 1 106 407 A2**
(43) Date of publication of application: **13.06.2001**
(21) Application number: 00203257.1
(22) Date of filing: 19.09.2000
(51) Int. Cl.: B60J 1/00, B61D 25/00

(54) **Breaking device for glazing panels**

(30) Priority: 09.12.1999 GB 9929184
(71) Applicant: GLAVERBEL, B-1170 Bruxelles (BE)
(72) Inventor: Chinzi, Calogero, 7100 La Louvière (BE)
(74) Representative: Vandenberghen, Lucienne

(57) **Abstract**

A breaking device for a multiple-sheet laminated glazing panel to be used in a passenger transport vehicle comprises a breaking element (10) secured to the panel and manually operated drive means, such as a rotatable pin with a cylindrical surface carrying worm threads (12) to engage with corresponding threads on the panel, to move the element to effect successive breaking of all the sheets (1, 2).

## Description

This invention relates to a breaking device for glazing panels, particularly for laminated glazing panels for a vehicle such as a railway carriage, which are also to serve as emergency exits from the vehicle.

Glazing panels for vehicles typically comprise a laminated sheet having one or two tempered glass sheets bonded to a resin layer, the laminated sheet being used alone or combined with another sheet into a double glazing panel. In some of the vehicles in which they are employed, for example in railway carriages and passenger buses, they have come to serve not only as windows but also as emergency exits. This is the result of the windows being disposed in openings arranged along both sides of the vehicle structure. The use of panels in an openable frame within openings arranged along the sides of the vehicle structure has become fairly rare, since for ease of construction and for the mechanical strength of the vehicle body as a whole the panels, usually in a surrounding frame, are secured directly to the peripheral edges of the openings.

There have been many prior proposals for the constituent layers of glazing panels for vehicles. For example our earlier British patent specification GB 2227207-A describes a glazing assembly having a laminated panel spaced from a single sheet of clear tempered glass, the panel having an outer sheet of clear tempered glass, an intervening layer of acrylic resin, a second sheet of clear tempered glass and an anti-solar coating. The presence of acrylic resin between the said inner and outer two sheets of glass has an "acoustic" effect, attenuating the acoustic transmission properties of the laminated panel.

In addition to such anti-solar and acoustic attenuation qualities, these multiple-layered panels have very high levels of mechanical strength. In serving as emergency exits they have required the use of a suitable heavy object, for example a pointed hammer weighing up to 1 kg, to break the glass sheets and enable any resin layer to be ripped open to permit escape through the opening.

The heavy object must be located in a position close to the panel and must be readily releasable to permit its rapid removal in the event of an accident or emergency. The nature and location of the heavy object are however attractive properties for vandalism and they tend to be stolen and used to cause unwanted damage. Quite apart from the damage, the removal of the heavy object means that the object is no longer in place for its required location.

A different means of breaking a glass sheet is proposed by French patent No. 2096199, in which a destruction device including an explosive charge is disposed in a hole formed in the glass sheet. Activation of the device is achieved by applying an electrical current to the explosive. The main intended purpose of the sheet is to close a compressed gas source used to inflate a vehicle air bag in the event of an accident. If used in a laminated window one such device would need to be used for each of the glass sheets present. There is also the likelihood that in the event of a serious accident the wiring intended to carry the activating current would be severed.

Another device for breaking glass, in this case a laminated safety glass window in a motor vehicle, is proposed in US patent No. 5318145. The breakage is effected by detection means which, upon sensing a side collision, activate striking means to break the window. The aim is not to provide an emergency exit but instead to break the window quickly so that it presents a softer surface for any impact with a passenger's head. The striking means may be electrically activated, for example in association with a pyrotechnic charge, or mechanically activated, for example by a hydraulic piston. Both of these options provide a device which is relatively complex, and thus relatively expensive. The complexity also increases the risk that the device will fail to work properly following a serious accident, since the activation means may itself be damaged in the accident.

It is an object of the present invention to provide a simple manually operated device for opening vehicle emergency exit panels, which is reliably present and operable at the point at which it is needed.

According to the invention there is provided a breaking device for a laminated glazing panel to be used in a passenger transport vehicle, which panel comprises at least two glass sheets and an intervening resin layer, which device comprises a breaking element secured to the panel and manually operated drive means to move the element to effect successive breaking of all the sheets.

The breaking device of the invention ensures that means of breaking the panel are immediately and reliably available in the event of an accident and it thus facilitates rapid escape of passengers through the emergency exit so formed. Experience has shown that the conditions accompanying accidents of transport vehicles make for considerable difficulties in locating and applying a removable breaking device. Such conditions may include smoke or fire, an overturned attitude of the vehicle, and any associated physical injury or distressed state of mind of the person trying to break open the emergency panel. By not requiring the presence of a removable breaking device the invention provides the further advantage of preventing unauthorised removal of a device which could be taken by ill-intentioned persons to cause unwanted damage elsewhere. By avoiding the presence of externally activated means, the invention remains operable in the event of severing of such means.

The breaking element is preferably a rigid pin, most preferably with a pointed end. The pin, and in particular the pointed end, permits a high localised force sufficient to break a glass sheet to be applied to each sheet in turn. While its cross section is typically circular, a square or other cross-sectional shape may be suitable in specific applications.

In one embodiment of the invention the drive means are provided by a combination of a pin with a cylindrical surface carrying worm threads and corresponding threads on the panel. Worm threads permit a small rotational driving force applied the pin to create a much greater force against the glass sheets and thus to ensure breakage of the glass. The pin can be rotated by finger pressure, in which case it is preferably provided with a ridged or roughened outer end to provide for sufficient finger grip, or by an operating handle attached to its outer end. Such an operating handle need not be integral with the pin, but if it is located separately it must be within easy reach of the panel and be easily visible to its intended user.

Alternatively the drive means are provided by one or more springs, for example a compressed coil spring in a housing containing the pin, and the device further includes a release member for the spring. The release member should be highly visible and should desirably carry easily read wording or symbols indicating how it is to be activated. When it is activated it permits the springing means to force the pin through the glass sheets. The release member preferably includes an easy-grip tag or handle to facilitate its rapid removal.

The breaking element may be secured to a support piece attached to a frame surrounding the panel or alternatively may be secured directly to one or more glass sheet, for example being fitted into a hole therein.

In the embodiment of the invention including a support piece the pin and drive means are both carried on the support piece and aligned generally at right angles to the glass sheets. Operation of the drive means moves the pin progressively through the panel, breaking each sheet in turn.

The embodiment of the invention in which the element is located in a hole in one or more of the glass sheets is generally preferred in that the panel of the invention can be installed in the same frames and in the same vehicle openings as ordinary panels. The hole is preferably of circular cross section, both for ease of its formation and for ease of fitting components into it, but may if required be of decreasing cross-section, i.e. tapering, through the thickness of the glass.

Preferably the element is located in a hole in the first of the sheets. It is preferably held in an insert, for example a flanged cylinder with a central opening, within the hole. The leading end of the pin thus projects beyond the first glass sheet and serves to break through the second and any subsequent glass sheets and through any intervening resin layers. In this embodiment the pin must therefore additionally provide for breakage of the first sheet. Thus the pin conveniently comprises an enlarged portion having a greater cross section than the hole such that as the pin is driven through the panel, and after the leading end has broken the other sheet(s), the enlarged portion breaks the first sheet. If desired an annular member, for example of metal or plastic) can be located in the hole on the same side of the first sheet as the enlarged portion so as to bear against the glass as the enlarged portion advances and to facilitate the breaking of the glass.

In the case of a multiple glazing panel, the breaking element is preferably located in matching holes in the first pair of sheets.

In the embodiment in which the drive means comprises a pin with worm threads, the hole-mounted pin preferably includes a frusto-conical portion with its larger diameter greater than the size of the hole. As the worm screw is turned the leading end of the pin successively breaks the other glass sheet(s) and then the holed sheet is broken by the force exerted by the frusto-conical portion, and any associated annular portion, as it continues to be turned.

The hole is preferably formed near the edge of the glass sheet, but not so close to the edge to be masked by the frame on which it is to be located. A typical preferred distance is 30 mm from the edge. The near-the-edge location assists in meeting the official standards for mechanical strength of panels used in vehicles. For example the panel is typically required to withstand without breaking a 50 kg weight dropped from a height of 1.5 m. Similarly the hole is preferably fairly small, for example having a diameter of 6 to 8 mm.

Moreover, in the case of a double glazing panel, the hole is preferably located near the top of the sheet. This helps to avoid broken fragments of one or more sheets from blocking access to other sheets.

The invention includes within its scope a laminated window panel comprising one or more pairs of glass sheets with an intervening resin layer between the or each pair and comprising a breaking device as described and claimed herein. In such a panel the glass sheets are preferably made of thermally tempered glass. Tempered glass has the advantage that on breaking it forms into small blunt fragments which remain attached to the resin layer. This creates a supple and readily ruptured residual panel to be removed or bent aside to form the aperture of the emergency exit.

It is preferred to employ the breaking device of the present invention in association with a glazing panel in which the resin layer includes modifications which facilitate the formation of an escape aperture. One such glazing panel is taught by EP-A1-0562951 (Vertal Nord Est) in which the resin layer has a line of mechanical weakness defining a shape to provide an aperture sufficiently large for the passage of a person. Another option is described in British patent specification 2280925 (Glaverbel) in which a zone of the resin layer is modified, for example by the presence of a line of adhesive tape, to assist its breakage in the region of that zone. With such modifications a period of 30 seconds is typically sufficient to break through the panel.

A further advantage of glass fragments adhering to the resin when the panel is broken is the consequent reduction in the risk of wounds arising during escape through the broken panel or of wounds being caused by the escape of glass fragments, especially if the vehicle is still moving.

The material of the resin layer may be a sheet of solid plastic such as polyvinylbutyral (PVB) but is preferably a polymeric material which has a liquid precursor to be solidified in situ. Preferably, the polymeric material is a polyester, a vinyl polymer, an epoxy resin or an acrylic resin.

If a liquid precursor is used in the version of panel which includes a hole in one or more of the glass sheets then it is necessary to employ a cover, for example of a plastic material such as polyvinyl chloride to close the or each hole. The material of this cover must be transparent to UV so as not to hinder the polymerisation of the resin. The cover must have a small thickness (e.g. 0.5 mm) so as to be easily pierced by the pin and can be coloured so as to be easily located.

For certain applications, double glazing panels have a laminated external sheet and a single interior sheet. In this case, the breaking device according to the invention is preferably mounted on the single sheet.

For some other applications, double glazing panels include two sets of laminated sheets. In this case, the breaking device is preferably mounted on one of the sets of glass sheets.

A breaking device according to the invention should preferably be located on the side of the panel that in use will be inside the passenger vehicle, so as to permit its operation from within the vehicle. It may however be desirable for the panel also to include such a device on the side of the panel that in use will be outside the vehicle, so as to enable outside rescuers to release injured occupants of the vehicle.

The invention is further described with reference to the accompanying drawings, in which:
Figure 1 is a sectional side view of part of a laminated sheet fitted with a device according to the invention;
Figure 2 is a sectional side view of pin-holding components used in the device illustrated in figure 1;
Figure 3 is a side view of a breaking pin as illustrated in Figure 1 plus a manual operating handle for use therewith;
Figure 4 is a sectional side view of part of a three-pane double glazing panel with a device according to the invention fitted to one of the glass sheets of the panel;
Figure 5 is a sectional side view of part of a three-pane double glazing panel with a device according to the invention fitted to a support on the frame of the panel;
Figure 6 is a sectional side view of part of a four-pane double glazing panel with a device according to the invention fitted to one of the glass sheets of the panel;
Figure 7 is a sectional side view of part of a four-pane double glazing panel with a device according to the invention fitted to a support on the frame of the panel.

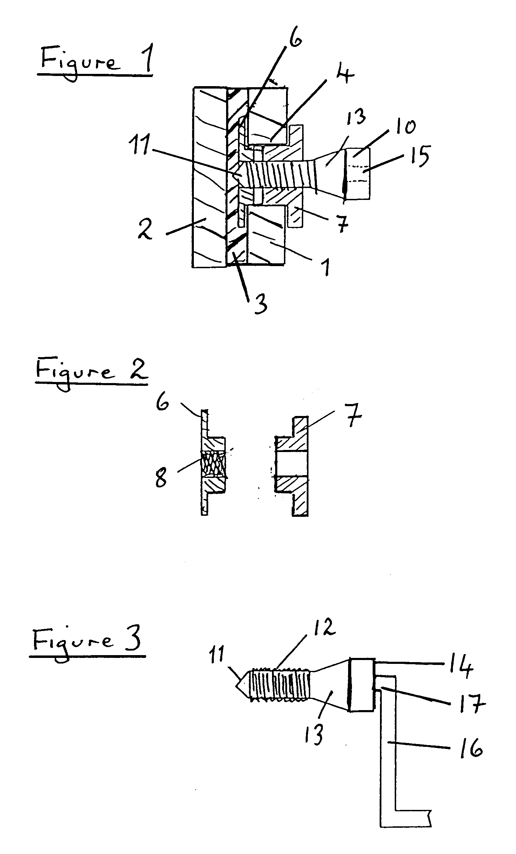

Figure 1 shows portions of tempered glass sheets 1 and 2 laminated to an acrylic resin layer 3, all forming part of a vehicle glazing panel. A circular hole 4 in sheet 1 receives a flanged and internally threaded nut 6 and a flanged insert 7. Figure 2 shows the nut 6 and flanged insert 7 separate from the sheet 1 and illustrates the presence of threads 8 in the nut 6 and the absence of threads in the insert 7. A breaking pin 10 (also shown in Figure 3) has a hard pointed end 11, a threaded cylindrical portion 12, a frusto-conical portion 13 and a wider cylindrical portion 14. A hexagonal orifice 15 is provided in the centre of portion 14 to receive an operating lever 16. One end of the lever 16 has a hexagonal portion 17 to engage with the orifice 15.

Figure 1 shows the device with the pin 10 in position ready for use. The forward end of the threads 12 engages with the corresponding internal threads 8. The point 11 projects slightly into the acrylic layer 3 but stops short of contact with the glass sheet 2.

In order to break the glass sheets 1 and 2 the pin 10 is turned in a clockwise direction, with the aid of the lever 16, and advances to bring the point 11 first into contact with, and then to break, the glass sheet 2. Continued turning of the lever 16 brings the frusto-conical portion 13 into contact with the insert 7 and imposes upon the glass sheet 1 both a squeezing action between the respective flanges of the nut 6 and insert 7 and a thrusting action in the plane of the sheet 1 through the insert 7 and the edges of the hole 4, until these combined actions break sheet 1. The broken sheets 1 and 2 and the resin layer 3 are then pushed aside to create the required escape aperture.

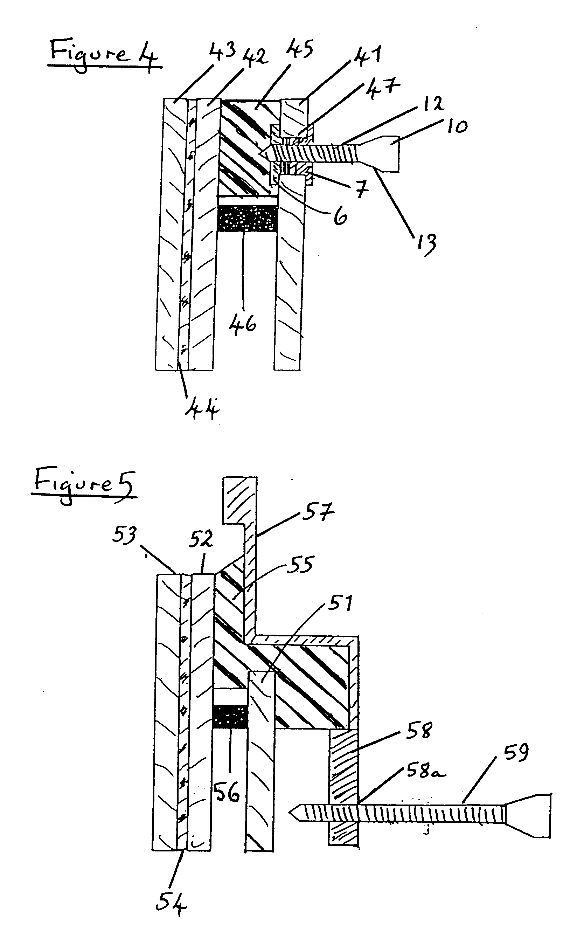

Figure 4 shows portions of tempered glass sheets 41, 42 and 43 forming part of a three-pane glazing panel. Sheet 41 is a single sheet but sheets 42 and 43 are laminated to an acrylic resin layer 44. Sheet 41 is bonded to the laminated sheets 42 and 43 by a peripheral layer 45 of silicone adhesive and is spaced apart from the laminated sheets 42 and 43 by a butyl rubber spacer 46. A circular hole 47 in sheet 41 receives a breaking assembly of the type shown in Figure 1, including a flanged and internally threaded nut 6, a flanged insert 7 and a threaded breaking pin 10.

The breaking action in the Figure 4 panel is similar to that in Figure 1, except that the point 11 of pin 10 must break through the bonding layer 45, resin layer 44 and both sheets of glass (42, 43) before the frusto conical portion 13 breaks the sheet 41.

Figure 5 shows portions of tempered glass sheets 51, 52 and 53 forming part of a three-pane vehicle glazing panel of generally similar configuration to that of Figure 4. Sheets 52 and 53 are laminated to an acrylic resin layer 54. Figure 5 also shows a portion 57 of a frame in which the glass is held. Sheet 51 is bonded to the frame and to the laminated sheets 52 and 53 by a peripheral portion 55 of silicone adhesive. It is spaced apart from the laminated sheets 52 and 53 by a butyl rubber spacer 56. In this case the breaking element is an elongated threaded pin 59 but the configuration differs from that of Figure 4 in that the pin 59 is mounted on a metal support piece 58 with a tapped hole 58a.

To break the Figure 5 panel the pin 59 is rotated, with the aid of an operating lever (not shown) so that its point breaks in succession through sheet 51, sheet 52, the acrylic layer 54 and sheet 53.

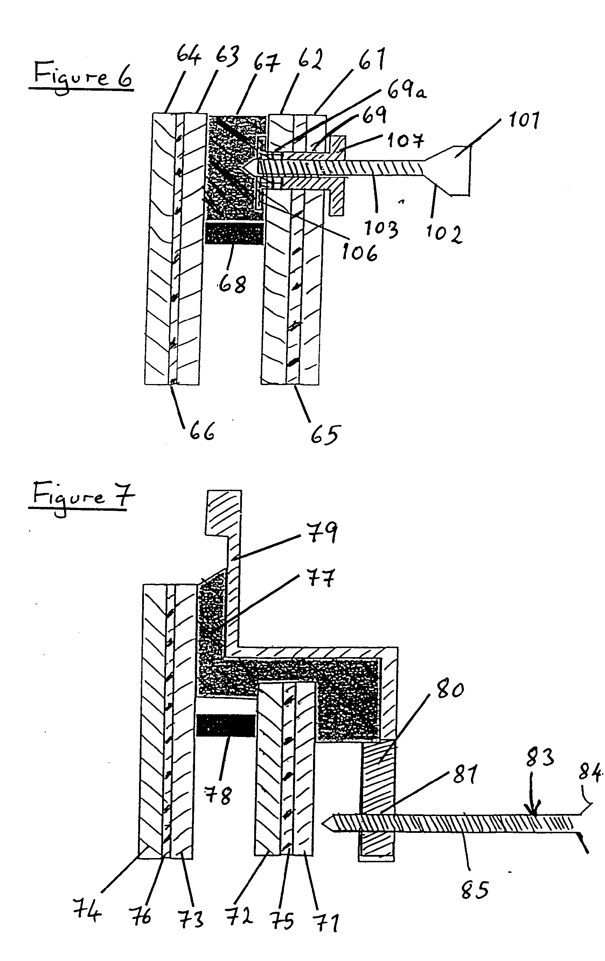

Figure 6 shows portions of tempered glass sheets 61, 62, 63 and 64 forming part of a four-pane glazing panel. Sheets 61 and 62 and sheets 63 and 64 are laminated to acrylic resin layers 65 and 66 respectively. Sheet 62 is bonded to sheet 63 by a peripheral layer 67 of silicone adhesive and is spaced apart from sheet 63 by a butyl rubber spacer 68. Circular holes 69 and 69a are formed in respectively sheets 61 and 62 and receive a breaking assembly generally similar to that shown in Figure 1 but with an elongated pin 101 having a frusto-conical portion 102 and a cylindrical threaded portion 103 of extended length to be capable of passing through the whole panel.

A flanged and internally threaded nut 106 is located in the hole 69a in sheet 62 and a flanged insert 107 fits into the hole 69 in sheet 61 and extends into the hole 69a in sheet 62.

The breaking action in the Figure 6 panel is similar to that in Figures 1 and 4. The point of pin 101 breaks through the bonding layer 67 and resin layer 66 and breaks the sheets of glass 63 and 64. The frusto-conical portion 102 breaks the sheets 61 and 62.

Figure 7 shows portions of tempered glass sheets 71, 72, 73 and 74 forming part of a four-pane glazing panel of generally similar configuration to that of Figure 6. Sheets 71 and 72 and sheets 73 and 74 are laminated to acrylic resin layers 75 and 76 respectively. Sheet 72 is bonded to sheet 73 by a peripheral layer 77 of silicone adhesive and is spaced apart from sheet 73 by a butyl rubber spacer 78. Figure 7 also shows a portion 79 of a frame in which the glass is held. Sheets 71 and 72 are bonded to the frame 79 and to the laminated sheets 73 and 74 by a peripheral portion 77 of silicone adhesive. They are spaced apart from the laminated sheets 73 and 74 by a butyl rubber spacer 78. In this case the breaking element is a pin 83 with an elongated threaded portion 85 and a frusto-conical portion 84. The configuration differs from that of Figure 6 in that the pin 83 is mounted on a metal support piece 80 with a tapped hole 81.

To break the Figure 7 panel the pin 83 is rotated, with the aid of an operating lever (not shown) so that its point breaks in succession through sheet 71, the acrylic layer 75, sheet 72, sheet 73, the acrylic layer 76 and sheet 74.

## Claims

1. A breaking device for a laminated glazing panel to be used in a passenger transport vehicle, which panel comprises at least two glass sheets and an intervening resin layer, which device comprises a breaking element secured to the panel and manually operated drive means to move the element to effect successive breaking of all the sheets.

2. A breaking device as claimed in claim 1, in which the breaking element is a rigid pin.

3. A breaking device as claimed in claim 2, in which the pin has a pointed end.

4. A breaking device as claimed in any preceding claim, in which the drive means are provided by a combination of a pin with a cylindrical surface carrying worm threads and corresponding threads on the panel.

5. A breaking device as claimed in any of claims 1 to 3, in which the drive means are provided by one or more springs, and the device further includes a release member for the spring(s).

6. A breaking device as claimed in claim 5, in which the drive means are provided by a compressed coil spring in a housing containing the pin.

7. A breaking device as claimed in claim 5 or claim 6, in which the release member includes an easy-grip tag or handle to facilitate its rapid removal.

8. A breaking device as claimed in any preceding claim, in which the breaking element is secured to a support piece attached to a frame surrounding the panel.

9. A breaking device as claimed in any of claims 1 to 7, in which the breaking element is secured directly to one or more glass sheet.

10. A breaking device as claimed in claim 9, in which the breaking element is fitted into a hole in the glass sheet(s).

11. A breaking device as claimed in claim 10, in which the hole is circular.

12. A breaking device as claimed in claim 10 or claim 11, in which the device is held in an insert within the hole.

13. A breaking device as claimed in claim 12, in which the panel is a multiple glazing panel and the breaking element is located in matching holes in a laminated pair of sheets.

14. A breaking device as claimed in any of claims 10 to 13, in which the drive means comprises a pin with worm threads which further comprises a frusto-conical portion with its larger diameter greater than the size of the hole.

15. A breaking device as claimed in any of claims 10 to 14, in which the hole is formed near the edge of the glass sheet.

16. A breaking device as claimed in any of claims 10 to 15, in which the hole has a diameter of 6 to 8 mm.

17. A breaking device as claimed in any of claims 10 to 16, in which the hole is located near the top of the sheet.

18. A breaking device as claimed in any preceding claim, in which the material of the resin layer is a polymeric material which has a liquid precursor to be solidified in situ.

19. A breaking device as claimed in claim 18 and wherein the panel includes a hole in one or more of the glass sheets, in which a cover is employed to close the or each hole.

20. A laminated window panel comprising a breaking device as claimed in any preceding claim, in which the glass sheets are made of thermally tempered glass.
